# EUROPÄISCHE PATENTSCHRIFT

(11) **EP 1 600 253 B1**
(45) Veröffentlichungstag und Bekanntmachung des Hinweises auf die Patenterteilung: **28.05.2008**
(21) Anmeldenummer: 05009411.9
(22) Anmeldetag: 29.04.2005
(51) Int. Cl.: B23Q 5/10, B23Q 11/12, H02K 5/20, H02K 9/197

(54) **Werkzeugmaschinen-Elektrospindel mit Kühlkanälen**
Electric spindle for machine tool, with coolant passages
Electro-broche de machine-outil, avec canaux de refroidissement

(30) Priorität: 04.05.2004 DE 102004022301
(43) Veröffentlichungstag der Anmeldung: 30.11.2005
(73) Patentinhaber: Meyer, Rolf, 4310 Rheinfelden (CH)
(72) Erfinder: Meyer, Rolf, 4310 Rheinfelden (CH)

(56) Entgegenhaltungen:
- EP-A- 1 271 747
- FR-A- 2 823 382
- US-A- 5 062 330

## Beschreibung

Die Erfindung betrifft eine Werkzeugmaschinen-Elektrospindel gemäß dem Oberbegriff des Anspruchs 1.

Derartige Werkzeugmaschinen-Elektrospindeln werden vielfach bei der industriellen Fertigung eingesetzt, wo sie zur Bearbeitung von Werkstücken insbesondere zum Fräsen, Schleifen und Bohren dienen.
Für den einzelnen Bearbeitungsvorgang wird eine sehr hohe Motorleistung benötigt, die mit einer entsprechenden Wärmeentwicklung in der Elektrospindel verbunden ist.
Aufgrund der hohen Wärmeentwicklung sind bei Elektrospindeln für Werkzeugmaschinen aufwendige Kühlmaßnahmen notwendig. Man unterscheidet zwischen flüssig- und luftgekühlten Maschinen.
Die Kühlung erfolgt normalerweise über eine Kühlhülse, die in Wärmekontakt mit dem Stator steht und die im Spindelgehäuse angeordnet ist.

Die zur Verfügung stehende Motorleistung wird wesentlich durch die auftretende Wärmeentwicklung (Verlustwärme) und natürlich auch von einer effektiven Kühlung des Antriebs begrenzt. Bereits geringe Leistungsverbesserungen können bei solchen Werkzeugmaschinen von großer wirtschaftlicher Bedeutung sein. Dies gilt sowohl für Maschinen, die bei der Serienproduktion eingesetzt werden, wo durch eine Erhöhung der Motorleistung die Bearbeitungszeit der einzelnen Werkstücke verringert werden kann, was höhere Taktraten und höhere Stückzahlen ermöglicht, als auch für Maschinen, die für kontinuierliche Bearbeitungsvorgänge mit sehr langen Bearbeitungszeiten eingesetzt werden.
Des Weiteren werden auch möglichst niedrige Motortemperaturen angestrebt um Längenänderungen der Spindelwelle zu vermeiden und um die Temperatur der Spindellager bei hohen Drehzahlen möglichst niedrig zu halten.

Häufig ist auch der verfügbare Bauraum für solche Maschinen vorgegeben bzw. relativ beschränkt, so dass bei gleicher Leistung kleinere Motoren vorteilhaft sind.

Allgemein gilt bei der Entwicklung von Werkzeugmaschinen, dass möglichst vorhandene Bauteile weiterentwickelt werden, als dass völlig neue Ausführungen geplant und gebaut werden. Die Entwicklung und Einführung völlig neuer Bauteile ist meist sehr aufwendig und kostspielig.

Aus der Druckschrift EP 1 271 747 ist ein flüssigkeitsgekühlter Elektromotor bekannt, der ein dünnwandiges Spaltrohr aufweist, das als Trennung des mit Luft gefüllten Rotorraums und des mit Kühlmedium (Kühlflüssigkeit) gefüllten Statorraums dient. Die Kühlflüssigkeit wird über Kanäle im Gehäuse und über eine Kühlhülse mit Kühlkanälen in den Statorraum geführt. Die beschriebene Kühleinrichtung ist relativ aufwendig aufgebaut, sie benötigt ein entsprechend großes Bauvolumen und ist wirtschaftlich nur für Synchronmaschinen einsetzbar.

Aus der Druckschrift US 5062330 ist eine gattungsgemäße Elektrospindel bekannt, bei der die Kühlkanäle zirkular um die Rotorachse verlaufen.

Aufgabe der vorliegenden Erfindung ist es eine Werkzeugmaschinen-Elektrospindel zu schaffen, die die oben angegebenen Nachteile nicht aufweist, die insbesondere eine Leistungserhöhung der Werkzeugmaschinen-Elektrospindel ohne auf einen zusätzlichen Bauraum angewiesen zu sein ermöglicht und die einfach und kostengünstig realisierbar ist.

Gelöst wird diese Aufgabe durch die im Anspruch 1 angegebenen Merkmale.

Weiterentwicklungen der Erfindungen sind in den Unteransprüchen angegeben.

Die wesentliche Idee der Erfindung besteht darin, dass der aus einem Blechpaket bestehende Stator randseitige Außennuten aufweist, die zusammen mit dem Spindelgehäuse Kanäle zur Aufnahme eines Kühlmediums bilden.

Durch den direkten Wärmekontakt des Stators mit dem Kühlmedium ist die Kühlung erheblich effektiver als bei einer Zwischenschaltung einer Kühlhülse. Weiterhin wird durch den Wegfall der Kühlhülse zusätzliches Volumen für den Stator gewonnen. Dieser gewonnene Bauraum kann zur besseren Führung des magnetischen Flusses verwendet werden. Dadurch wird der magnetische Kreis im Bereich des Stators entlastet.
All diese Maßnahmen ermöglichen eine Leistungssteigerung der Elektrospindel oder eine Verringerung der Erwärmung derselben.

In einer Weiterentwicklung der Erfindung sind die die Außennuten begrenzenden Stege, direkt gegenüberliegend von den einzelnen Wicklungsnuten im Stator angeordnet. Dadurch ist eine besonders effektive Entlastung des magnetischen Kreises möglich.

In einer Weiterentwicklung der Erfindung sind zusätzliche Innennuten im Statorblechpaket vorgesehen. Dadurch kann das Kühlmedium z. B. über die durch die Außennuten gebildeten Kühlkanäle zugeführt und über die durch die Innennuten gebildeten Kühlkanäle abgeführt werden. Auf den Zufluss des Kühlmittels durch das Spindelgehäuse kann dadurch verzichtet werden und die Kontaktfläche Kühlmittel-Stator wird erheblich größer.

In vorteilhafter Weise sind die Innennuten zwischen den Stegen und den Wicklungsnuten angeordnet.

In einer Weiterentwicklung der Erfindung ist jeder Wicklungsnut genau eine Außennut und eine Innennut zugeordnet.

In einer Weiterentwicklung der Erfindung sind die Wickelköpfe der Statorwicklungen vergossen, wobei die Vergussmasse zusammen mit einem Endblech des Stators einen Ringraum zur Führung des Kühlmittels aufweist.

Zur Abdichtung dieses Ringraumes zum Spindelgehäuse bzw. zum Stator-Endblech dient je ein Dichtelement.

Eine Alternative zum Vergießen der Wickelköpfe besteht darin, dass als Kühlflüssigkeit ein Isolieröl eingesetzt wird, das die Wickelköpfe direkt umspült. Bei diesem Ausführungsbeispiel ist es notwendig den Statorraum vom Rotorraum durch ein Spaltrohr zu trennen.

Nachfolgend ist die Erfindung anhand einer Zeichnung näher erläutert. Es zeigen:
- Fig. 1: herkömmliche Werkzeugmaschinen-Elektrospindel im Längsschnitt
- Fig. 2: erfindungsgemäße Werkzeugmaschinen-Elektrospindel im Längsschnitt
- Fig. 3: Detaildarstellung gemäß Fig. 2 im Bereich des Statorblechpakets im Querschnitt

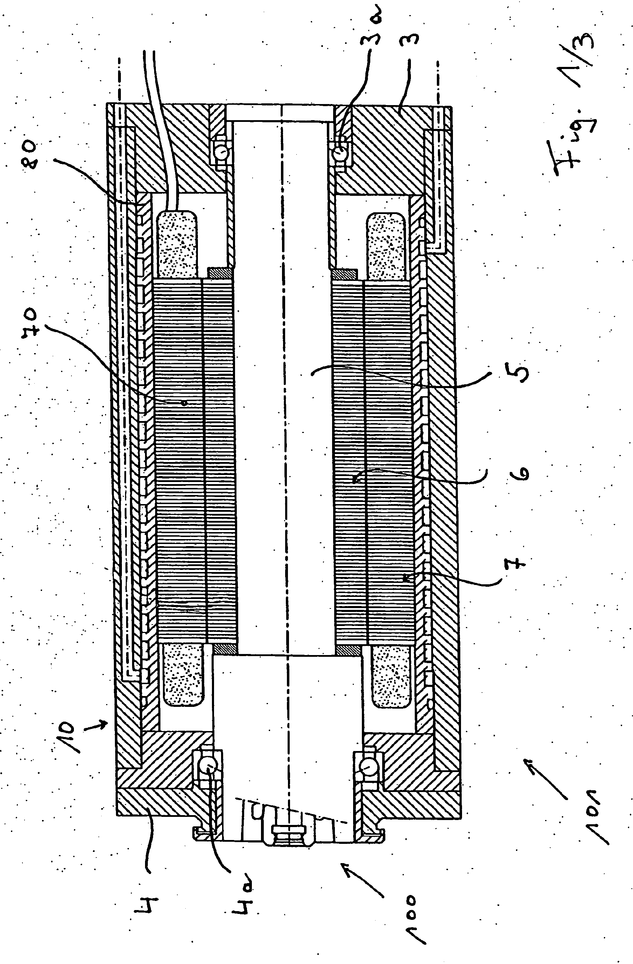

In Fig. 1 ist eine herkömmliche Elektrospindel 101 für Werkzeugmaschinen näher dargestellt. Typische Kenngrößen einer derartigen Elektrospindel sind Leistung 40kW, Drehzahl 18000-24000 U/min, Spannung 3x380 V, Länge 420 mm, Durchmesser 170 mm.

Die Elektrospindel 101 weist einen Stator 7 und einem Rotor 6 auf, die in einem Spindelgehäuse 10 angeordnet sind. Das Spindelgehäuse 10 ist endseitig mit je einem Lagerschild 3 bzw. 4 verschlossen. Jedes der beiden Lagerschilde 3, 4 trägt die Lager 3a, 4a für die Spindelwelle 5, die mit einer Werkzeugaufnahmevorrichtung 100 ausgerüstet ist. An der anderen Seite der Elektrospindel befinden sich die Versorgungszuführungen z. B. Strom, Kühlmittel, Druckluft, Öl etc..
Derartige Antriebe produzieren im Betrieb eine erhebliche Verlustwärme, Diese Verlustwärme wird über eine massive Kühlhülse 80 abgeführt. Sie steht in direktem Wärmekontakt mit dem Statorblechpaket 70. Die Wärmeabfuhr erfolgt über ein Kühlmedium, in der Regel Wasser, das sich in einem Zwischenraum, der vom Spindelgehäuse 10 und der Kühlhülse 80 gebildet wird, befindet. Bei einem Statordurchmesser von 135 mm kann die Kühlhülse 80 eine Stärke von ca. 6 mm aufweisen.

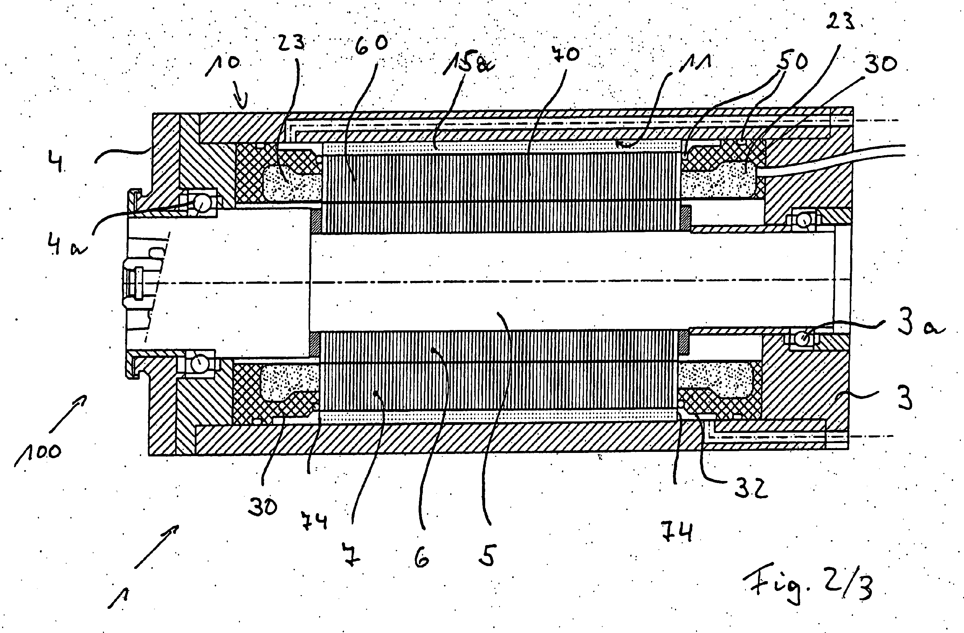

In Fig. 2 ist eine erfindungsgemäße Elektrospindel für Werkzeugmaschinen näher dargestellt. Im Unterschied zu der in Fig. 1 dargestellten herkömmlichen Elektrospindel 101 weist die erfindungsgemäße Elektrospindel 1 keine Kühlhülse 80 mehr auf. Zur Aufnahme des Kühlmediums dienen Kühlkanäle 15a, die durch Außennuten 15 im Statorblechpaket 70 und durch die Innenwandung 11 des Spindelgehäuses 10 gebildet werden. Im dargestellten Fall verlaufen die Kühlkanäle 15a in axialer Richtung.

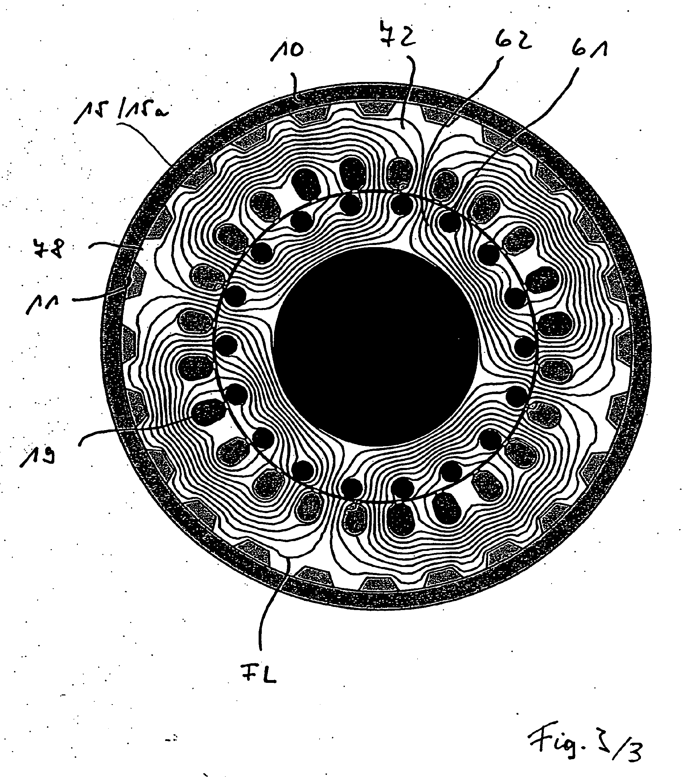

Die Fig. 3 zeigt eine etwas vergrößerte Detaildarstellung mit einem Statorblech 72 des Statorblechpakets 70 gemäß Fig. 2. Wie aus dieser Figur zu entnehmen ist, berühren die einzelnen Statorbleche 72 des Statorblechpakets 70 die Innenwandung 11 des Spindelgehäuses 10 bis auf die Bereiche der Außennuten 15. Die Außennuten 15 bilden die Kühlkanäle 15a die durch Stege 78 und das Spindelgehäuse 10 begrenzt werden. Gegenüberliegend von den Stegen 78 sind Wicklungsnuten 19 für die Statorwicklungen angeordnet. Vom Rotor 6 ist ein einzelnes Rotorblech 62 des Rotorblechpakets 60 mit mehreren Rotornuten 61, die die Stäbe des Kurzschlusskäfigs enthalten, dargestellt.
Zur Verdeutlichung des Verlaufs des Magnetfeldes für das Statorblech 72 und für das Rotorblech 62 sind magnetische Feldlinien FL eingezeichnet.

In einer nicht gezeigten alternativen Ausgestaltung der Statorbleche gemäß Fig. 3. weist das Statorblech 72 neben den Außennuten 15 zusätzlich noch Innennuten 21 auf, die zwischen den Stegen 78 und den Wicklungsnuten 19 angeordnet sind.
In das Statorblechpaket eingebracht bilden diese Nuten zusätzliche Kühlkanäle durch die das Kühlmedium näher an die Wärmequellen Statorblechpaket und Statorwicklungen wirksam werden kann. Es ist auch möglich, dass das Kühlmedium über die von den Außennuten 15 gebildeten Kühlkanäle 15a in eine Richtung und über die durch die Innennuten gebildeten Kühlkanäle in umgekehrter Richtung zu bzw. abfließt.

Die Anzahl der Stege 78 bzw. der Außennuten 15 stimmt mit der Anzahl der Wicklungsnuten 19 überein.

Bei dem in Fig. 2 dargestellten Ausführungsbeispiel sind die Wickelköpfe 23 der Statorwicklung mit einer Vergussmasse 30 vergossen. Vergussmasse 30 und ein Endblech 25 des Statorblechpakets 70 bilden zusammen mit dem Spindelgehäuse 10 einen Ringraum 32 über den das Kühlmedium für die Kühlkanäle 15a bzw. durch Innennuten gebildete Kühlkanäle zu- bzw. abgeführt werden kann. Das Endblech 74 weist eine Stärke von 1-2 mm auf.
Zur Abdichtung der Vergussmasse 30 zum Endblech 74 bzw. zum Spindelgehäuse 10 dient je ein Dichtelement 50 (z. B. O-Ring). Neben einem Vergießen der Wickelköpfe sind auch andere Ausgestaltungen denkbar.

In einer weiteren nicht in der Zeichnung dargestellten alternativen Ausgestaltung der Erfindung wird als Kühlmedium ein Isolieröl verwendet. In diesem Fall ist ein Vergießen der Wickelköpfe 23 nicht notwendig. Rotorraum und Statorraum sind dann durch ein übliches Spaltrohr getrennt. Damit wird ein Eindringen des Kühlmediums (isolieröl) in den Rotorraum verhindert.

Ein wesentlicher Vorteil der Erfindung ist darin zu sehen, dass durch den Wegfall der Kühlhülse die Kühlung verbessert und mehr Platz für das Statorblechpaket 70 geschaffen wird, was eine Leistungssteigerung des Antriebes ermöglicht. Weiterhin kann der magnetische Fluss, wie aus Fig. 3 deutlich zu sehen ist, in die Bereiche der Stege 78 ausweichen um dadurch den Bereich hoher magnetischer Flussdichte zu entlasten. Auch durch diese Maßnahme ist eine weitere Leistungssteigerung möglich.

Durch die zusätzlichen Innennuten 21 werden weitere Kühlkanäle 21a geschaffen, so dass das Kühlmedium näher an die Wärmequellen Statorblechpaket und Wicklung gebracht wird. Es ist auch möglich das Kühlmedium durch die Kanäle 15a und die durch die Innennuten gebildeten Kühlkanäle in unterschiedlicher Richtung fließen zu lassen. Es entfällt dann die Rückführung des Kühlmittels durch das Spindelgehäuse im Bereich des Motors.
Dadurch kann die Wandstärke des Spindelgehäuses minimiert und der Durchmesser des Statorblechpakets weiter vergrößert werden.
Durch die efindungsgemäßen Maßnahmen, die eine verbesserte Kühlung bzw. eine günstigere Führung des Magnetfeldes zur Folge haben und die den Einbau eines größeren Motors ermöglichen , kann die Antriebsleistung der Elektrospindel ohne Änderung der Außenabmessungen erhöht oder die Temperatur insbesondere der Lager verringert werden.
Als Kühlmedium kommt vorwiegend Wasser, Öl oder Luft in Betracht.

Mit der vorliegenden Erfindung ist eine Leistungssteigerung, eine Verringerung der Temperatur oder eine kleinere Elektrospindel bei gleicher Leistung möglich, die kostengünstig und einfach realisierbar ist. Sie ist sowohl für Synchron- wie auch für Asynchronmotoren geeignet.

## Patentansprüche

1. Werkzeugmaschinen-Elektrospindel mit einem Spindelgehäuse (10) in dem ein Stator (7) angeordnet ist, der über einen Rotor (6) eine Spindelwelle (5) antreibt, wobei der Stator (7) aus einem Statorblechpaket (70) besteht, das formschlüssig an der Innenwandung (11) des Spindelgehäuses (10) anliegt und das außenrandseitig mehrere Außennuten (15) aufweist, die Kühlkanäle (15a) zur Aufnahme eines Kühlmediums bilden, **dadurch gekennzeichnet, dass** die Kühlkanäle (15a) in Richtung der Rotorachse verlaufen.

2. Elektrospindel nach Anspruch 1, **dadurch gekennzeichnet, dass** die Außennuten (15) durch Stege (78) begrenzt sind, die jeweils gegenüberliegend von im Stator (7) vorgesehenen Wicklungsnuten (19) angeordnet sind.

3. Elektrospindel nach einem der vorhergehenden Ansprüche, **dadurch gekennzeichnet, dass** im Statorblechpaket (70) Innennuten vorgesehen sind, die zusätzliche Kühlkanäle bilden.

4. Elektrospindel nach Anspruch 3, **dadurch gekennzeichnet, dass** die Innennuten jeweils zwischen den Stegen (78) und den Wicklungsnuten (19) angeordnet sind.

5. Elektrospindel nach Anspruch 4, **dadurch gekennzeichnet, dass** jeder Wicklungsnut (19) genau eine Außennut (15) bzw. eine Innennut zugeordnet ist.

6. Elektrospindel nach einem der vorhergehenden Ansprüche, **dadurch gekennzeichnet, dass** den im Statorblechpaket (70) verlaufenden Statorwicklungen vergossene Wickelköpfe (23) zugeordnet sind und die Vergussmasse (30) zusammen mit einem Endblech (74) des Statorblechpakets (70) und dem Spindelgehäuse (10) einen Ringraum (32) bildet, über den das Kühlmedium zu bzw. abgeführt wird.

7. Elektrospindel nach Anspruch 6, **dadurch gekennzeichnet, dass** zur Abdichtung des Ringraums (32) zum Spindelgehäuse (10) bzw. Statorblechpaket (70) je ein Dichtelement (50) dient.

## Claims

1. Machine tool spindle with a spindle housing (10) wherein a stator (7) is arranged which drives a spindle (10) over a rotor shaft (6), whereby the stator (7) is made of a plate package (70) which fits to the inner wall (11) of the spindle housing (10) which has several grooves at the periphery (15) forming cooling channels (15a) for a cooling medium, **characterized in that** the cooling channels (15a) extend in the direction of the rotor axis.

2. Machine tool spindle according to claim 1, **characterized in, that** the outer grooves (15) are limited by partitions (78), which are located opposite of winding grooves (19) which are arranged in the stator (7).

3. Machine tool spindle according to the previous claims, **characterized in that** inner grooves are arranged in the stator plate package (70), which form additional cooling channels.

4. Machine tool spindle according to claim 3, **characterized in that** the inner grooves are arranged between the partitions (78) and the winding grooves (19).

5. Machine tool spindle according to claim 4, **characterized in that** one winding groove (19) is assigned one outer groove (15) or one inner groove.

6. Machine tool spindle according to previous claims, **characterized in that** sealed winding heads (23) are assigned to the windings in the stator plate package (70) and the sealing substance (30) forms together with an end sheet (74) of the stator plate package (70) a ring area (32) for guiding the cooling medium.

7. Machine tool spindle according to claim 6, **characterized in that** between the ring area (32) and the spindle housing (10) or the stator plate package (70) one sealing element (50) is arranged each.

## Revendications

1. Broche électrique de machine-outil munie d'un caisson de broche (10), dans lequel est disposé un stator (7), lequel entraîne un arbre de broche (5) par l'intermédiaire d'un rotor (6), le stator (7) étant constitué d'un empilage de tôles statoriques (70) qui repose sans jeu contre la paroi intérieure (11) du caisson de broche (10) et qui présente sur son bord extérieur plusieurs rainures extérieures (15) formant des canaux de refroidissement (15a) destinés à la réception d'un liquide de refroidissement, **caractérisé en ce que** les canaux de refroidissement (15a) sont orientés dans le sens de l'axe du rotor.

2. Broche électrique selon la revendication 1, **caractérisée en ce que** les rainures extérieures (15) sont limitées par des bossages (78), qui sont respectivement disposés en face des rainures d'enroulement (19) prévues dans le stator.

3. Broche électrique selon l'une des revendications précédentes, **caractérisée en ce que** sont prévues, dans l'empilage de tôles statoriques (70), des rainures intérieures formant des canaux de refroidissement supplémentaires.

4. Broche électrique selon la revendication 3, **caractérisée en ce que** les rainures intérieures sont respectivement disposées entre les talons (78) et les rainures d'enroulement (19).

5. Broche électrique selon la revendication 4, **caractérisée en ce qu'**exactement une rainure extérieure (15) ou exactement une rainure intérieure est attribuée à chaque rainure d'enroulement (19).

6. Broche électrique selon l'une des revendications précédentes, **caractérisée en ce que** des têtes d'enroulement scellées (23) sont attribuées aux enroulements statoriques disposés dans l'empilage de tôles statoriques (70) et **en ce que** la masse de scellement (30) forme conjointement avec une tôle d'extrémité (74) de l'empilage de tôles statoriques (70) et du caisson de broche (10) un espace annulaire (32), par l'intermédiaire duquel le liquide de refroidissement est alimenté ou évacué.

7. Broche électrique selon la revendication 6, **caractérisée en ce qu'**un élément d'étanchéité sert respectivement à l'étanchéité entre l'espace annulaire (32) et le caisson de broche (10) et entre l'espace annulaire (32) et l'empilage de tôles statoriques (70).
